(19) Europäisches Patentamt

European Patent Office

Office européen des brevets

(11) Veröffentlichungsnummer: **0 253 076**
**B1**

(12) **EUROPÄISCHE PATENTSCHRIFT**

(45) Veröffentlichungstag der Patentschrift: **03.10.90**

(21) Anmeldenummer: **87105936.6**

(22) Anmeldetag: **23.04.87**

(51) Int. Cl.⁵: **F 02 B 37/12**

(54) **Verfahren zur Steuerung eines Abblaseventils eines Turboladers.**

(30) Priorität: **12.07.86 DE 3623541**

(43) Veröffentlichungstag der Anmeldung:
**20.01.88 Patentblatt 88/03**

(45) Bekanntmachung des Hinweises auf die
Patenterteilung:
**03.10.90 Patentblatt 90/40**

(84) Benannte Vertragsstaaten:
**DE ES FR GB IT NL SE**

(56) Entgegenhaltungen:
**EP-A-0 069 632**
**EP-A-0 079 255**
**DE-A-3 129 686**
**DE-A-3 420 015**
**US-A-4 474 008**

**PATENT ABSTRACTS OF JAPAN, Band 9, Nr. 67
(M-366)1790r, 27. März 1985; & JP-A-59 200 019
(YAMAHA HATSUDOKI K.K.) 13-11-1984**

(73) Patentinhaber: **Dr.Ing.h.c. F. Porsche
Aktiengesellschaft
Porschestrasse 42
D-7000 Stuttgart 40 (DE)**

(72) Erfinder: **Esch, Hans-Joachim, Dr. Dipl.-Ing.
Panoramastrasse 64
D-7258 Heimsheim (DE)**

(56) References cited:
**PATENT ABSTRACTS OF JAPAN, Band 9, Nr.
231 (M-414)1954r, 18. September 1985; & JP-A-
60 88 824 (NISSAN JIDOSHA K.K.) 18-05-1985**

**PATENT ABSTRACTS OF JAPAN, Band 9, Nr.
252 (M-420)1975r, 9. Oktober 1985; & JP-A-60
104 720 (AISAN KOGYO K.K.) 10-06-1985**

**PATENT ABSTRACTS OF JAPAN, Band 9, Nr. 60
(M-364)1783r, 16. März 1985; & JP-A-59 194 031
(DAIHATSU KOGYO K.K.) 02-11-1984**

Courier Press, Leamington Spa, England.

**Beschreibung**

Die Erfindung betrifft ein Verfahren nach der Gattung des Anspruchs 1 oder 6.

Durch die Ausrüstung von Brennkraftmaschinen mit Abgasturboladern ist es möglich, wenigstens einen Teil der im Abgas vorhandenen Verlustenergie zurückzugewinnen und der Brennkraftmaschine wieder zuzuführen. Da die vom Abgasturbolader geförderte Ladeluftmenge und damit der Ladedruck jedoch erst bei größerem Abgasstrom (d. h., bei höheren Werten von Motorlast und -drehzahl) ausreichende Werte annimmt und zudem mit wachsendem Abgasstrom stark anwächst, muß zum Erreichen einer guten Dynamik der Brennkraftmaschine und zum Vermeiden ihrer Zerstörung der Ladedruck geregelt und/oder gesteuert werden.

Dies erfolgt in der Regel durch ein pneumatisch gesteuertes Abblaseventil (Bypassventil), welches vom Ladedruck beaufschlagt ist und in einem Nebenschlußkanal (Bypass) zur Turbine des Abgasturboladers liegt und so bei zu hohen Ladedrücken den Abgasstrom durch die Turbine reduziert.

Wird jedoch bei relativ hoher Last ein Leistungsteuerorgan (Drosselklappe) der Brennkraftmaschine plötzlich nicht mehr betätigt, beispielsweise zum Wechsel einer Fahrstufe eines mit dieser Brennkraftmaschine ausgerüsteten Kraftfahrzeugs, so entsteht vor der Drosselklappe ein Druckstoß, weil der Abgasturbolader zunächst noch weiter Ladeluft fördert; dadurch können unter Umständen Einrichtungen im Ansaugweg der Brennkraftmaschine, wie z. B. Drosselklappe oder Luftmengenmesser, zerstört werden.

Um dies zu vermeiden, wurde in der DE-OS 32 46 483 vorgeschlagen, das Abblaseventil bei geschlossener Drosselklappe zu öffnen. Hierdurch nimmt jedoch die Drehzahl des Turboladers beim Übergang in den Schubbetrieb, beispielsweise beim Wechsel der Fahrstufe stark ab, so daß die damit verlorengegangene Energie zum Wiederbeschleunigen der Brennkraftmaschine nach durchgeführtem Wechsel der Fahrstufe fehlt.

Aus der JP 59-200 019 A2 ist eine Steuerung für den Ladedruck einer Brennkraftmaschine mit Turbolader bekannt. Hierbei wird der Ladedruck über ein pneumatisch betätigtes Abblaseventil (Wastegate) in einem Turbinenbypass geregelt. Nach Loslassen des Fahrpedals wird das Wastegate in den geschlossenen Zustand gesteuert; ist das Wastegate beim Loslassen des Fahrpedals jedoch geöffnet, so wird ein Schließen des Wastegates solange verzögert, bis der Ladedruck abgebaut ist. Hierdurch wird ein rascher Ladedruckabbau erreicht.

Die DE 34 20 015 A1 zeigt eine Mehrzylinder-Brennkraftmaschine mit zwei Turboladern, von denen der eine während des Betriebs der Brennkraftmaschine zum anderen zuschaltbar ist. In die Abgasleitung des einen Turboladers ist hierzu ein steuerbares Zuschaltventil eingesetzt, das betriebspunktabhängig öffnet und somit den Abgasstrom zum anderen Turbolader begrenzt. Ein steuerbares Abblaseventil (Wastegate) in einem beiden Turboladern gemeinsamen Bypass läßt eine beliebige Begrenzung der Abgasströme zu beiden Turboladern zu. Beide Ventile werden mittels eines Steuergeräts in Abhängigkeit von der Stellung einer Drosselklappe und der Drehzahl der Brennkraftmaschine gesteuert.

Es ist daher Aufgabe der Erfindung, einen Verlust von kinetischer Energie in Abgasturboladern von Brennkraftmaschinen beim Übergang in den Schubbetrieb weitgehend zu vermeiden und trotzdem die Brennkraftmaschinen einschließlich aller ihrer Nebenaggregate sicher vor Überlastung durch zu hohe Ladedrücke zu schützen.

Die Aufgabe wird durch die kennzeichnenden Merkmale des Anspruchs 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß beim Übergang in den Schubbetrieb durch das Ansteuern des Abblaseventils bzw. des Zuschaltventils in seinen geschlossenen Zustand ein Verlust von kinetischer Energie in Abgasturboladern weitgehend vermieden ist. Durch Einfügen eines Entlüftungsventils in einen Bypass zum Verdichter, welches bei Unterdruck im Sammelsaugrohr der Brennkraftmaschine und bei zu hohen Ladedrücken öffnet, werden ferner Druckstöße im Ansaugweg der Brennkraftmaschine bedämpft.

Die Erfindung wird anhand von in den Zeichnungen dargestellten Ausführungsbeispielen nachstehend näher erläutert.

Es zeigt:

Fig. 1 ein Schaltbild einer Abgasturbolader-Anlage einer Mehrzylinder-Brennkraftmaschine,

Fig. 2 ein als Tabelle dargestelltes, quantisiertes und digitalisiertes Tastverhältnis- Vorsteuer-Kennfeld,

Fig. 3 ein Schaltbild nach Fig. 1, jedoch für eine Register- Turblader-Anlage

Fig. 4 eine Tabelle mit einer Zuordnung von Tastverhältniswerten zu Betriebsbereichen,

Fig. 5 eine Tabelle nach Fig. 2, jedoch für die Register- Turbolader-Anlage nach Fig. 3.

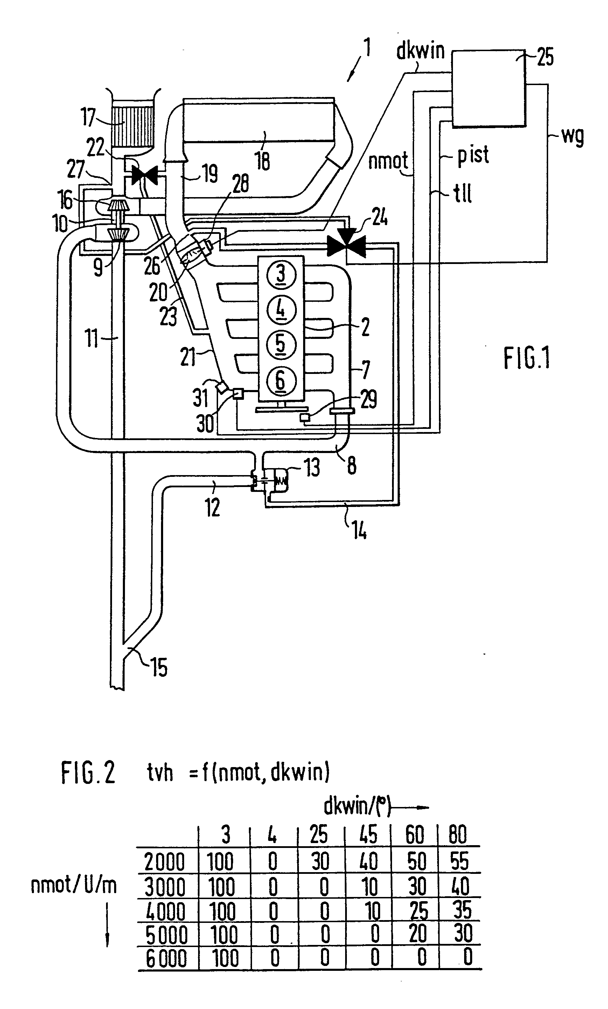

In Fig. 1 ist mit 1 eine Abgasturboladeranlage für eine Brennkraftmaschine 2 gezeigt. Abgasrohre von Zylindern 3 bis 6 münden in eine gemeinsame Abgassammelleitung 7, von welcher eine Abgasleitung 8 zum Antrieb einer Turbine 9 eines Abgasturboladers 10 ausgeht. Der Ausgang der Turine 9 führt über eine Rohrleitung 11 in ein (nicht gezeigtes) Auspuffsystem, welches Schalldämpfer und/oder Katalysatoren umfassen kann.

Von der Abgasleitung 8 zweigt ferner eine Bypassleitung 12 ab. In diese ist ein steuerbares Abblaseventil 13 (Wastegate) eingesetzt, welches über eine erste Steuerleitung 14 pneumatisch ansteuerbar ist. Die Bypassleitung 12 schließlich mündet an einem Verzweigungspunkt 15 in die Rohrleitung 11.

Der von der Turbine 9 getriebene Verdichter 16 saugt Luft über einen Luftfilter 17 an und fördert Ladeluft über einen Ladeluftkühler 18, eine Ladedruckleitung 19 und eine Drosselklappe 20 zu einem Sammelsaugrohr 21, von welchem sie gleichmäßig auf die Zylinder 3 bis 6 verteilt wird.

Der Verdichter 16 ist schließlich noch über ein Entlüftungsventil 22 kurzschließbar, um einen Betrieb des Abgasturboladers 10 an bzw. oberhalb der Pumpgrenze zu verhindern. Es wird in an sich bekannter Weise über eine zweite Steuerleitung 23, welche den Steuereingang des Entlüftungsventils 22 mit dem Sammelsaugrohr 21 verbindet, angesteuert. Es öffnet sich, sofern im Sammelsaugrohr 21 Unterdruck entsteht oder der Druck in der Ladedruckleitung 19 zu groß wird.

In die erste Steuerleitung 14 ist ein getaktet betriebenes Steuerventil 24 eingesetzt, welches über ein Steuergerät 25 angesteuert ist und die erste Steuerleitung 14 entweder mit einer Druckentnahmestelle 26 in der Ladedruckleitung 19 stromauf der Drosselklappe 20, bzw. stromauf des Ladeluftkühlers 18, oder mit Atmosphärendruck, bzw. einer Druckentnahmestelle 27 vor dem Verdichtereintritt verbindet.

Das Steuerventil 24 wird über ein Signal wg mit einem Tastverhältnis tvh angesteuert, welches vom Steuergerät 25 bereitgestellt wird. Das Tastverhältnis bzw. dessen Wiederholfrequenz ist hierbei derart gewählt, daß das vom Steuerventil 24 angesteuerte Abblaseventil 13 in seinem gesamten Arbeitsbereich von 0% bis 100% kontinuierlich in Öffnungs- bzw. Schließrichtung verstellbar ist.

Zur Bestimmung des Tastverhältnisses tvh ermittelt das Steuergerät 25 mittels eines Drosselklappensensors 28 die Stellung der Drosselklappe (Drosselklappenwinkel dkwin), mittels eines Drehzahlsensors 29 die Drehzahl nmot der Brennkraftmaschine 2, mittels eines Ladedrucksensors 30 den Ladedruck pist und mittels eines Temperatursensors 31 die Ladelufttemperatur tll.

Im Steuergerät 25 wird das Tastverhältnis tvh über ein Tastverhältnis-Vorsteuer- Kennfeld tvh=f(nmot,dkwin), für welches ein Beispiel in Fig. 2 dargestellt ist, aus der Drehzahl nmot und dem Drosselklappenwinkel dkwin ermittelt. Dieser Vorsteuerung kann in bekannter Weise eine ladedruckabhängige Regelung und/oder eine ladeluftabhängige Korrektur überlagert sein, wie dies beispielsweise in der DE-OS 31 29 686 beschrieben ist. Hier soll jedoch nur eine Vorsteuerung betrachtet werden, weshalb das Signal wg mit dem Tastverhältnis tvh identisch zu setzen ist.

Aus Sicherheitsgründen ist die Abgasturboladeranlage so ausgelegt, daß das Steuerventil 24 im nicht angesteuerten Zustand (tvh=0) die Steuerleitung 14 und damit das Abblaseventil 13 mit der Druckentnahmestelle 26 stromauf der Drosselklappe 20 verbindet. Damit ist gewährleistet, daß die Abgasturboladeranlage bzw. die Brennkraftmaschine auch bei Ausfall des Steuergeräts 25 oder des Steuerventils 24 nicht beschädigt wird, da sich das Abblaseventil 13 mit ansteigendem Ladedruck sicher öffnet und trotzdem ein Notbetrieb der Brennkraftmaschine gewährleistet ist.

Im vollständig angesteuerten Zustand (tvh=100) verbindet das Steuerventil 24 die erste Steuerleitung 14 dagegen mit der Druckentnahmestelle 27 am Verdichtereinlaß bzw. mit Atmosphärendruck, so daß das Abblaseventil geschlossen wird. Durch die getaktete Arbeitsweise des Steuerventils 24 ist somit theoretisch jede Position des Abblaseventils 13 von der vollständig geöffneten bis zur vollständig geschlossenen Stellung ansteuerbar; ein Öffnen des Abblaseventils 13 ist jedoch nur dann möglich, sofern das Druckniveau an der Entnahmestelle 26 stromauf der Drosselklappe 20 ausreichend hoch ist, um den gegen Federkraft geschlossen gehaltenen Ventilteller des Abblaseventils von seinem Sitz abzuheben.

Bei Leerlauf der Brennkraftmaschine bzw. bei niedriger Last wird dieses Druckniveau jedoch nicht erreicht, da dort die Fördermenge eines Abgasturboladers zu gering ist. Aus diesem Grunde erscheint es auch weder logisch noch sinnvoll, das Steuerventil 24 bei nicht betätigter Drosselklappe 20 anzusteuern; üblicherweise ist deshalb die unterste Drehzahlkennlinie dkwin=konstant=Minimum=3° im Tastverhältnis- Vorsteuer-Kennfeld tvh=f(nmot,dkwin) mit dem Tastverhaltnis tvh=0 besetzt.

Beim Übergang der Brennkraftmaschine in den Schubbetrieb (Schließen der Drosselklappe), beispielsweise bei einem Schaltvorgang, fördert der Abgasturbolader zunächst noch weiter Ladeluft gegen die geschlossene Drosselklappe 20, so daß vor ihr ein Druckstoß entsteht. Dieser pflanzt sich über das (nicht angesteuerte) Steuerventil 24 in die erste Steuerleitung 14 fort, so daß das Abblaseventil vollständig aufgedrückt wird und wertvolle Energie im Abgas über die Bypassleitung 12 verlorengeht.

Diese Energie wird jedoch für das Wiederbeschleunigen der Brennkraftmaschine nach Beenden des Schaltvorgangs dringend vom Abgasturbolader 10 benötigt. Erfindungsgemäß wird deshalb das Abblaseventil 13 in seine geschlossene Stellung gesteuert, indem das Steuerventil mit einem Tastverhältnis tvh=100 vollständig angesteuert wird, so daß es die erste Steuerleitung 14 mit der Atmosphäre verbindet.

Das Tastverhältnis- Vorsteuer- Kennfeld tvh=f(nmot,dkwin) nach Fig. 2 weist deshalb in seiner untersten Drehzahlkennlinie dkwin=konstant=Minimum=3° den Tastverhältniswert tvh=100 auf.

Der vor der Drosselklappe 20 entstehende Druckstoß wird, wie schon weiter oben beschrieben, über das Entlüftungsventil 22 bedämpft bzw. in seiner Höhe begrenzt, da ja beim Schließen der Drosselklappe 20 stromab von dieser ein Unterdruck entsteht, welcher das Entlüftungsventil 22 (über die zweite Steuerleitung 23) öffnet.

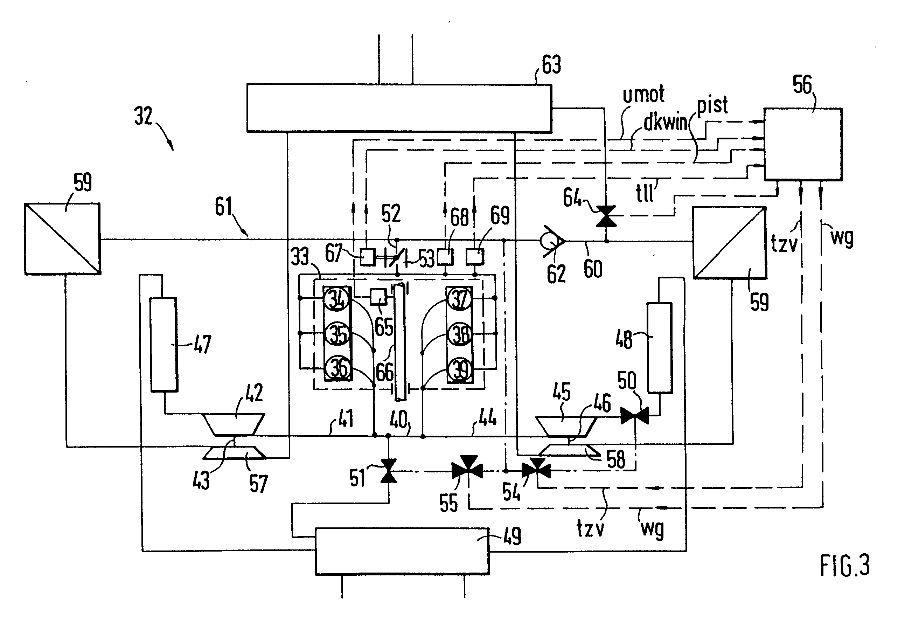

Die in Fig. 3 gezeigte Register- Turbolader-Anlage 32 für eine Brennkraftmaschine 33 ist in der DE-OS 34 20 015 und in einer von der Anmelderin am selben Tag unter dem Titel "Mehrzylinder- Brennkraftmaschine mit zwei Abgasturboladern" hinterlegten Anmeldung näher beschrieben, so daß nachstehend nur kurz auf den Aufbau, die prinzipielle Funktionsweise und die erfindungsgemäße Besonderheit in der Ansteuerung von Abgasventilen im Schubbetrieb eingegangen wird.

Pneumatische Leitungen sind hierbei durchgezogen, pneumatische Steuerleitungen strichpunktiert und elektrische Leitungen gestrichelt gezeichnet. Zylinder 34 bis 39 sind (in nicht notwendiger Weise) in zwei Gruppen aufgeteilt. Die Abgasrohre aus den Zylindern münden in ein gemeinsames Abgassammelrohr 40, von dem eine Abgasleitung 41 zum Antrieb einer Turbine 42 eines ersten Abgasturboladers 43 und eine weitere Abgasleitung 44 zum Antrieb einer Turbine 45 eines zweiten Abgasturboladers 46 ausgeht. Der Ausgang der Turbinen 42 und 45 kann entweder über Vorschalldämpfer 47, 48 bzw. Katalysatoren oder auch direkt über Rohrleitungen in einen Endschalldämpfer 49 geführt sein.

In die Abgasleitung 44 der Turbine 45 ist ein Zuschaltventil 50 eingesetzt, das sowohl vor als auch hinter der Turbine 45 angeordnet sein kann. Ferner ist das Abgassammelrohr 40 über ein Abblaseventil (Wastegate) 51 mit dem Endschalldämpfer 49 verbunden. Zuschaltventil 50 und Abblaseventil 51 sind pneumatisch betätigte Ventile, die in nicht angesteuertem Zustand geöffnet sind. Pneumatische Hilfsenergie, die einem Sammelsaugrohr 52 vor einer Drosselklappe 53 entnommen wird, wird den Ventilen 50, 51 über ihnen zugeordnete Steuerventile 54, 55 zugeführt.

Die elektrisch betriebenen Steuerventile 54, 55 werden durch ein Steuergerät 56 mit einem Tastverhältnis beaufschlagt und verbinden das Zuschaltventil 50 bzw. das Abblaseventil 51 im nicht angesteuerten Zustand mit der Atmosphäre. Genauer betrachtet wird ein Steuerraum des Zuschaltventils 50 bzw. des Abblaseventils 51 entsprechend dem anliegenden Tastverhältnis mehr oder weniger mit einem Druckmedium hohen Drucks (über die Druckentnahmestelle im Sammelsaugrohr 52 stromauf der Drosselklappe 53), bzw. mit einem Druckmedium niedrigen Drucks, beispielsweise der Atmosphäre verbunden, wobei im nicht angesteuerten Zustand der Steuerventile 54, 55 der Steuerraum auf Atmosphärendruck liegt; aus Übersichtlichkeitsgründen wurde in der Fig. 3 auf eine derartige Betrachtung jedoch verzichtet.

Die von den Turbinen 42 und 45 angetriebenen Verdichter 57, 58 fördern Druckluft über Ladeluftkühler 59 zum Sammelsaugrohr 52; vom Sammelsaugrohr 52 verteilt sich die Ladeluft gleichmäßig auf die Einzelsaugrohre zu den Zylindern 34 bis 39. In einem Teilabschnitt 60 einer Ladeluftleitung 61 ist ein Rückschlagventil 62, wie es in der DE-OS 34 20 015 näher beschrieben ist, eingesetzt. In einem Bypass zum Verdichter 58, der den Teilabschnitt 60 der Ladeluftleitung 61 mit einem Luftfilter 63 verbindet, ist ein Entlüftungsventil 64 eingesetzt; dieses ist über das Steuergerät 56 ansteuerbar.

Schließlich erfaßt das Steuergerät noch Signale von einem Drehzahlsensor 65 (Drehzahl nmot der Kurbelwelle 66 der Brennkraftmaschine 33), einem Drosselklappen- Stellungssensor 67 (Stellung der Drosselklappe 53, Drosselklappenwinkel dkwin), einem Saugrohrdrucksensor 68 (Saugrohrdruck pist im Sammelsaugrohr 52, stromabwärts der Drosselklappe) und einem Temperatursensor 69 (Ladelufttemperatur tan). Diese Signale setzt es in entsprechende Ansteuersignale für die Steuerventile 54, 55 des Zuschaltventils 50 und des Abblaseventils 51 und für das Entlüftungsventil 64 um.

Die Funktion des Zuschaltventils 50 und des Abblaseventils 51 erklärt sich wie folgt:

- Das Zuschaltventil 50 ermöglicht eine kontinuierlich verstellbare Beaufschlagung des 2. Abgasturboladers 46 mit Abgas und eine Beschleunigung seiner Laderwelle. Die darüber abfließende Abgasmenge reduziert gleichzeitig die dem ersten Abgasturbolader 43 zufließende Abgasmenge, so daß die Funktion des Zuschaltventils 50 — bezüglich des ersten Abgasturboladers 43 — der eines Wastegates (Abblaseventils) bei einfach aufgeladenem Motor entspricht.

— Das Wastegate ist gemeinsames Abblaseventil für beide Abgasturbolader 43, 46.

Die Ansteuerung des Zuschalt- 50 bzw. Abblaseventils 51 erfolgt in der Weise, daß sich ein Schließgrad (100% entspricht dem geschlossenen Zustand des Zuschalt- bzw. Abblaseventils) durch das am jeweiligen Steuerventil (getaktet betrieben) anliegende Tastverhältnis (bei konstanter Taktfrequenz) bestimmt; der Steuerbereich liegt hierbei zwischen 0% und 100%. Eine Ansteuerung der beiden Ventile mit einem von 0% bzw. 100% abweichenden Tastverhältnis (nicht angesteuert bzw. voll angesteuert) erfolgt für die beiden Ventile grundsätzlich alternativ, d.h., es gibt keinen Zustandspunkt der Brennkraftmaschine 33, bei der beide Ventile gleichzeitig mit einem derartigen Tastverhältnis beaufschlagt werden.

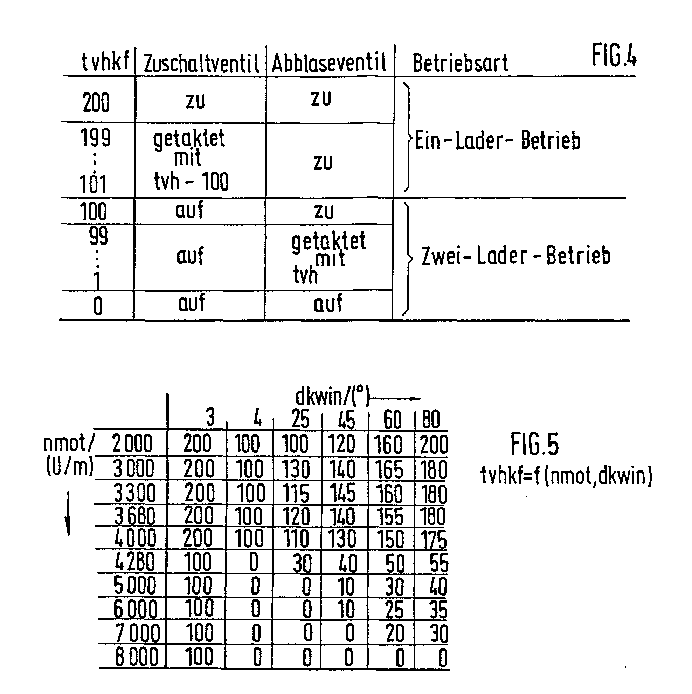

Hieraus ergibt sich die Möglichkeit, den Zustand beider Ventile eindeutig durch nur eine Bezugszahl darzustellen, einem "Tastverhältnis tvhkf" mit dem Bereich 0 bis 200 (siehe Fig. 4): Im Bereich von 0 bis 100 stellt tvhkf direkt das Tastverhältnis (zweites Tastverhältnis wg) für das Abblaseventil 51 dar. Im Bereich zwischen 100 bis 200 ergibt sich das Tastverhältnis (erstes Tastverhältnis tzv) für das Zuschaltventil 50 aus tvhkf durch Subtraktion von 100. Das Abblaseventil ist in diesem Bereich voll angesteuert, also zu.

Es wird somit lediglich ein Kennfeld für beide Ventile benötigt; es ergibt sich ein numerisch kontinuierlicher Übergang der Ansteuerung von einem Ventil zum anderen, so daß zusätzlich eine möglicherweise überlagerte Regelung vereinfacht wird. Der Bereich von tvhkf>100 bis tvhkf=200 sei nachfolgend "Ein- Lader- Betrieb", (auch wenn dort der zweite Lader bereits zu arbeiten beginnt) und der Bereich von tvhkf=0 bis tvhkf=100 "Zwei- Lader- Betrieb" genannt.

Die Ermittlung des Tastverhältnisvorsteuerwertes tvhkf erfolgt, wie schon weiter oben beschrieben, über ein Kennfeld tvhkf=f(nmot,dwkin) aus der Drehzahl nmot und dem Drosselklappenwinkel dkwin. Ein Beispiel für ein Tastverhältnis-Vorsteuer- Kennfeld ist Fig. 5 zu entnehmen.

Ein weiteres Problem entsteht beim Schaltvorgang durch den Übergang von hoher Last auf Schubbetrieb (Drosselklappe 53 nicht angesteuert): In der Ladeluftleitung entsteht hierbei, wie bei der konventionellen Turboladeranlage nach Fig. 1, stromaufwärts der Drosselklappe 53 — dort befindet sich die Abnahmestelle für den Hilfsdruck — kurzzeitig ein hoher Druck. Wenn nun für Drehzahlen nmot unterhalb eines Drehzahlgrenzwerts für das Umschalten in den Zwei- Lader-Betrieb ein Tastverhältnis tvhkf=100 anliegt, so wird das Turbinenzuschaltventil plötzlich voll aufgedrückt, wodurch der erste Abgasturbolader 43 rasch an Energie verliert. Entsprechendes gilt oberhalb dieses Drehzahlgrenzwerts, d. h. im Zwei- Lader- Betrieb; dort würde ein Tastverhältnis tvhk=0 bedeuten, daß das Abblaseventil öffnet und somit wertvolle Energie beider Abgasturbolader verlorengeht.

Das Tastverhältnis- Vorsteuer- Kennfeld nach Fig. 5 weist deshalb erfindungsgemäß folgende Besonderheit auf: Jede Drehzahlkennlinie nmot=konstant führt am unteren Ende des Wertebereichs des Drosselklappenwinkels dkwin einen steilen Sprung im Tastverhältnis-Kennfeldwert tvhk aus. Der Tastverhältnis- Kennfeldwert tvhk wird hier für Drehzahlen, die unterhalb des Drehzahlgrenzwerts für das Umschalten in den Zwei-Lader- Betrieb liegen, auf seinen Maximalwert tvhk=200 festgesetzt und für Drehzahlen, die oberhalb diese Grenzwerts liegen, auf den Wert des Zuschaltpunkts tvhk=100 gesetzt.

Die Steuergeräte 25 und 56 sind in an sich bekannter Mikrorechnertechnik aufgebaut und umfassen im wesentlichen einen Ein- Chip-Mikrorechner oder einen Mikroprozessor, beispielsweise vom Typ 8031 der Firma Intel, flüchtige und nichtflüchtige Speicher, analoge bzw. digitale Ein- und Ausgangsbausteine sowie Anpassungs- und Treiberbausteine. Einzelne Regelungs- und Steuerungsmodule sind als Software realisiert und zusammen mit dem an Stützstellen erfaßten, quantisierten und digitalisierten Kennfeld in den nichtflüchtigen Speichern abgelegt.

Saugrohrdruck pist, Ladelufttemperatur tll, Drehzahl nmot und Drosselklappenwinkel dkwin werden analog oder digital erfaßt oder können den Steuergeräten 25 bzw. 56 gegebenenfalls auch von einem Motormanagementrechner zur Verfügung gestellt werden. Analoge Größen werden hierbei über A/D-Wandler in für die Mikroprozessoren verwertbare Signale gewandelt. Selbstverständlich können die Steuergeräte auch diskret aus analogen/digitalen Bauelementen/Bausteinen aufgebaut sein.

## Patentansprüche

1. Verfahren zur Steuerung eines Abblaseventils (13) eines Turboladers (10) einer mittels einer Drosselklappe (20) gesteuerten Brennkraftmaschine (2), wobei der Turbolader (10) aus einer Turbine (9) und einem Verdichter (16) besteht und der Verdichter (16) über eine Ladedruckleitung (19) an ein Sammelsaugrohr (21) der Brennkraftmaschine (2) angeschlossen ist und die Turbine (9) in eine von einer Abgassammelleitung (7) ausgehende Abgasleitung (8) eingebaut ist und das Abblaseventil (13) in eine von der Abgassammelleitung (7) ausgehende, die Turbine (9) umgehende Bypassleitung (12) eingesetzt ist und die Ladedruckleitung (19) über ein Entlüftungsventil (22) mit dem Eingang des Verdichters (16) verbindbar ist, und wobei das Abblaseventil (13) und das Entlüftungsventil (22) über Steuereinrichtungen (23, 24, 25) steuerbar sind, dadurch gekennzeichnet, daß das Abblaseventil (13) mit dem Schließen der Drosselklappe (20) für eine begrenzte Zeitspanne in den geschlossenen Zustand gesteuert wird und der vor der Drosselklappe (20) entstehende Druckstoß durch Öffnen des Entlüftungsventils (22) in seiner Höhe begrenzt wird.

2. Verfahren nach Anspruch 1, dadurch gekennzeichnet, daß das im nicht angesteuerten Zustand geschlossene Abblaseventil (13) in an sich bekannter Weise mittels pneumatischer Hilfsenergie gesteuert wird, wobei eine der Zuführung der Hilfsenergie zum Abblaseventil (13) dienende erste Steuerleitung (14) durch ein Steuerventil (24) entweder mit einer Druckentnahmestelle (26) in der Ladedruckleitung (19) stromauf der Drosselklappe (20) oder mit einer Druckentnahmestelle (27) vor dem Verdichtereintritt (Atmoshärendruck) verbunden wird, wobei das Steuerventil (24) bei nichtangesteuerter Drosselklappe (20) ein Schließen des Abblaseventils (13) bewirkt.

3. Verfahren nach Anspruch 2, dadurch gekennzeichnet, daß das Steuerventil (24) über ein Steuergerät (25) mittels eines Tastverhältnissignals (wg) angesteuert wird, welches im Steuergerät (25) in Abhängigkeit von der Stellung der Drosselklappe (Drosselklappenwinkel (dkwin)) und/oder der Drehzahl (nmot) der Brennkraftmaschine (2) und/oder des Ladedrucks (pist) und/oder der Ladelufttemperatur (tll) bestimmt wird.

4. Verfahren nach wenigstens einem der Ansprüche 1 bis 3, dadurch gekennzeichnet, daß die erste Steuerleitung (14) bei nicht angesteuerter Drosselklappe (20) durch das Steuerventil (24) gegen die Atmosphäre geöffnet wird.

5. Verfahren nach wenigstens einem der vorangehenden Ansprüche 1 bis 4, dadurch gekennzeichnet, daß das Steuerventil (24) einer von den Betriebsparametern der Brennkraftmaschine (2), wenigstens jedoch von der Drehzahl (nmot) und der Stellung der Drosselklappe (Drosselklappenwinkel (dkwin)) abhängigen Kennfeldsteuerung unterworfen wird, deren Kennfeld derart ausgelegt wird, daß bei nichtangesteuerter Drosselklappe (20) das Schließen des Abblaseventils (13) bewirkt wird.

6. Verfahren zur Steuerung eines Abblaseventils (51) und eines Zuschaltventils (50) einer mit zwei aus je einer Turbine (57, 58) und einem davon angetriebenen Verdichter (42, 45) bestehenden Abgasturboladern (43, 46) ausgestatteten, mittels einer Drosselklappe (53) gesteuerten Brennkraftmaschine (33), wobei die Verdichter (42, 45) über gesonderte Ladedruckleitungen (60, 61) an ein gemeinsames Sammelsaugrohr (52) der Brennkraftmaschine (33) angeschlossen und die Turbinen (57, 58) in von einer Abgassammelleitung (40) der Brennkraftmaschine (33) ausgehende gesonderte Abgasleitungen (41, 44) eingebaut sind und der eine Abgasturbolader (46) während des Betriebs der Brennkraftmaschine (33) zum anderen Abgasturbolader (43) zuschaltbar ist, und wobei das steuerbare Abblaseventil (Wastegate (51)) in eine von der Abgassammelleitung (40) ausgehende, die Turbinen (57, 58) beider Abgasturbolader (43, 46) umgehende Bypaßleitung und das steuerbare Zuschaltventil (50) in die Abgasleitung der Turbine (45) des zuschaltbaren Abgasturboladers (46) eingesetzt ist, wobei sich nach Öffnen des Zuschaltventils (50) ein in die Ladeluftleitung (60) des Verdichters (45) des zuschaltbaren Abgasturboladers (46) eingesetztes Rückschlagventil (62) durch den sich in der Ladeluftleitung (60) aufbauenden Druck öffnen kann, und wobei das Abblaseventil (51) und das Zuschaltventil (50) mittels eines elektronischen Steuergeräts (56) in Abhängigkeit von durch Sensoren (65, 67, 68, 69) erfaßten Zustandsgrößen der Brennkraftmaschine (33) steuerbar sind und die Ansteuerung des Abblaseventils (51) und des Zuschaltventils (50) einer wenigstens zustandsgrößenabhängigen Vorsteuerung unterworfen ist, und die Ladeluftleitung (60, 61) über ein durch das Steuergerät steuerbares Entlüftungsventil (64) mit dem Eingang der Verdichter (57, 58) beider Turbolader (43, 46) verbindbar ist, dadurch gekennzeichnet, daß mit dem Schließen der Drosselklappe (53)

- das Zuschaltventil (50) und das Abblaseventil (51) in den geschlossenen Zustand gesteuert werden, sofern im vorausgegangenen Betriebspunkt das Abblaseventil (51) geschlossen und

- das Zuschaltventil (50) im teilweise geöffnetem Zustand (Ein- Lader- Betrieb) war, das Zuschaltventil (50) in den geöffneten und das Abblaseventil (51) in den geschlossenen Zustand gesteuert wird, sofern im vorausgegangenen Betriebspunkt das Zuschaltventil (50) vollständig geöffnet und das Abblaseventil (51) wenigstens teilweise geöffnet (Zwei- Lader- Betrieb) war und der aktuelle Betriebspunkt sich noch nicht in einem für den Ein- Lader- Betrieb gekennzeichneten Bereich befindet, und

- der vor der Drosselklappe (53) entstehende Druckstoß durch Öffnen des Entlüftungsventils (64) in seiner Höhe begrenzt wird.

7. Verfahren nach Anspruch 6, dadurch gekennzeichnet, daß das Zuschaltventil (50) und das Abblaseventil (51) durch pneumatische, dem Sammelsaugrohr (52) vor der Drosselklappe (53) abgenommene Hilfsenergie betätigte, im nichtangesteuerten Zustand geöffnete Ventile sind, denen die Hilfsenergie über getaktet betriebene, im nicht angesteuerten Zustand geschlossene Steuerventile (Taktventile) (54, 55) zugeführt wird, welche über das Steuergerät (56) wenigstens in Abhängigkeit von der Stellung (Drosselklappenwinkel (dkwin)) des Leistungssteuerorgans und der Drehzahl (nmot) der Brennkraftmaschine (33) oder zusätzlich in Abhängigkeit vom Ladedruck (pist) und/oder der Ladelufttemperatur (tll) mittels eines Tastverhältnisses (tzv, wg) angesteuert werden.

## Revendications

1. Procédé pour la commande d'une soupape de régulation (13) d'un turbocompresseur (10) d'un moteur à combustion interne (2), commandé au moyen d'un clapet d'étranglement (20), le turbocompresseur (10) étant constitué d'une turbine (9) et d'un compresseur (16) et le compresseur (16) étant raccordé à un tube d'aspiration collecteur (21) du moteur à combustion interne (2), par un conduit de pression de suralimentation (19) et la turbine (9) étant montée dans un conduit d'échappement (8), partant d'un collecteur d'échappement (7) et la soupape de régulation (13) étant insérée dans la dérivation partant du collecteur d'échappement (7) et contournant la turbine (9) et le conduit de pression de suralimentation (19) pouvant être relié à l'entrée du compresseur (16), par une soupape de purge d'air (22) et la soupape de régulation (13) ainsi que la soupape de purge d'air (22) étant commandées par des dispositifs de commande (23, 24, 25), caractérisé en ce que la soupape de régulation (13) est amenée en position fermée, avec la fermeture du clapet d'étranglement (20), pour un laps de temps limité et le choc de pression, se produisant en amont du clapet d'étranglement (20) et dû à l'ouverture de la soupape de purge (22), étant limité dans son importance.

2. Procédé selon la revendication 1, caractérisé en ce que la soupape de régulation (13), fermée à l'état non commandé, est commandé, de manière connue en soi, par une énergie pneumatique auxiliaire, un premier conduit de commande (14) servant à alimenter la soupape de régulation (13) en énergie auxiliaire étant relié, par une vanne de commande (24), soit à une prise de pression (26), placée dans le conduit de pression de suralimentation (19), en amont du clapet d'étranglement (20), soit à une prise de pression (27), placée en amont de l'entrée du compresseur (pression atmosphérique), la vanne de commande (24) entraînant une fermeture de la soupape de régulation (13), lorsque le clapet d'étranglement (20) n'est pas commandé.

3. Procédé selon la revendication 2, caractérisé en ce que la vanne de commande (24) est commandée, par l'intermédiaire d'un appareil de commande (25), au moyen d'un signal de durée de cycle (wg) qui est déterminé dans l'appareil de commande (25), en fonction de la position du clapet d'étranglement (angle de clapet d'étranglement (dkwin)) et/ou de la vitesse de rotation (nmot) du moteur à combustion interne (2) et/ou de la pression de suralimentation (pist) et/ou de la température de l'air de suralimentation (tll).

4. Procédé selon au moins l'une des revendications 1 à 3, caractérisé en ce que le premier conduit de commande (14) est ouvert vers l'atmosphère, par la vanne de commande (24), lorsque le clapet d'étranglement (20) n'est pas commandé.

5. Procédé selon au moins l'une des revendications 1 à 4, caractérisé en ce que la vanne de commande (24) est soumise à une commande de champ caractéristique, dépendant des paramètres de fonctionnement du moteur à combustion interne (2), mais d'au moins la vitesse de rotation (nmot) et de la position du clapet d'étranglement (angle de clapet d'étranglement (dkwin)), dont le champ caractéristique est tel qu'il entraîne la fermeture de la soupape de régulation (13), lorsque le clapet d'étranglement (20) n'est pas commandé.

6. Procédé pour la commande d'une soupape de régulation (51) et d'une soupape d'insertion (50) d'un moteur à combustion interne (33), équipé de deux turbocompresseurs d'échappement (43, 46), constitués chacun d'une turbine (57, 58) et d'un compresseur (42, 45) entraîné par celle-ci, commandé au moyen d'un clapet d'étranglement (53), les compresseurs (42, 45) étant raccordés, par des conduits de pression de suralimentation (60, 61) séparés à un tube d'aspiration collecteur (52) commun du moteur à combustion interne (33) et les turbines (57, 58) étant montées dans des conduits d'échappement (41, 44) séparés, partant d'un collecteur d'échappement (40) du moteur à combustion interne (33) et l'un (46) des turbocompresseurs d'échappement pouvant être relié pendant le fonctionnement du moteur à combustion interne (33), avec l'autre turbocompresseur d'échappement (43) et la soupape de régulation (wastegate (51)) commandable étant insérée dans une dérivation, partant du collecteur d'échappement (40) et contournant les turbines (57, 58) des deux turbocompresseurs d'échappement (43, 46), et la soupape d'insertion (50) étant insérée dans le conduit d'échappement de la turbine (45) du turbocompresseur d'échappement (46) raccordable, une vanne de non retour (62), insérée dans le conduit d'air de suralimentation (60) du compresseur (45) du turbocompresseur d'échappement (46) raccordable, pouvant s'ouvrir sous l'effet de la pression s'établissant dans le conduit d'air de suralimentation (60), après ouverture de la soupape d'insertion (50) et la soupape de régulation (51) et la soupape d'insertion (50) pouvant être commandées au moyen d'un appareil de commande (56) électronique, en fonction de grandeurs d'état du moteur à combustion interne, enregistrées par des capteurs (65, 67) et la commande de la soupape de régulation (51) et de la soupape d'insertion (50) étant soumise à une commande pilote, dépendant au moins des grandeurs d'état et le conduit d'air de suralimentation (60, 61) pouvant être relié, par une soupape de purge (64) commandée par l'appareil de commande, à l'entrée des compresseurs (57, 58) des deux turbocompresseurs (43, 44), caractérisé en ce qu'avec la fermeture du clapet d'étranglement (53)

- la soupape d'insertion (50) et la soupape de régulation (51) sont amenées en position fermée, si au point de fonctionnement précédent, la soupape de régulation (51) est fermée et si la soupape d'insertion (50) se trouve en position partiellement ouverte (fonctionnement avec un turbocompresseur),

- la soupape d'insertion (50) est amenée en position ouverte et la soupape de régulation (51) en position fermée, si au point de fonctionnement précédent, la soupape d'insertion (50) est totalement ouverte et la soupape de régulation (51) au moins partiellement ouverte (fonctionnement à deux compresseurs) et si le point de fonctionnement actuel ne se trouve pas encore dans un domaine caractéristique du fonctionnement à un compresseur et

- le choc de pression se produisant en amont du clapet d'étranglement (53) est limité dans son importance, par l'ouverture de la soupape de purge (64).

7. Procédé selon la revendication 6, caractérisé en ce que la soupape d'insertion (50) et la soupape de régulation (51) sont des soupapes actionnées par de l'énergie auxiliaire pneumatique, prélevée du tube d'aspiration collecteur (52), en amont du clapet d'étranglement (53), ouvertes à l'état non commandé, auxquelles on envoie l'énergie auxiliaire, par des vannes de commande (vannes séquentielles) (54, 55) fermées à l'état non commandé et fonctionnant suivant une certaine séquence lesquelles sont commandées, par l'intermédiaire de l'appareil de commande (56), au moins en fonction de la position (angle de clapet d'étranglement) (dkwin)) de l'organe de commande de puissance et en fonction de la vitesse de rotation (nmot) du moteur à combustion interne (33) ou, en supplément, en fonction de la pression de suralimentation (pist) et/ou de la température de l'air de suralimentation (tll), au moyen d'une durée de cycle (tzv, wg).

**Claims**

1. Method of controlling a blow-out valve (13) of turbo-supercharger (10) of an internal combustion engine (2) controlled by means of a throttle valve (20), wherein the turbo-supercharger (10) consists of a turbine (9) and a compressor (16), and the compressor (16) is connected to an induction manifold (21) of the internal combustion engine (2) via a boost pressure line (19), and the turbine (9) is mounted in an exhaust pipe (8) leading from an exhaust manifold (7), and the blow-out valve (13) is inserted into a bypass pipe (12) passing from the exhaust gas collecting pipe (7) and bypassing the turbine (9), and the boost pressure line (19) is connectable to the inlet of the compressor (16) via a ventilation valve (22), and wherein the blow-out valve (13) and the ventilation valve (22) are controllable via control devices (23, 24, 25), characterised in that the blow-out valve (13) is controlled in the closed state for a limited time span upon closing of the throttle valve (20) and the pressure impact arising upstream of the throttle valve (20) is limited in strength by opening of the ventilation valve (22).

2. Method according to claim 1, characterised in that the closed blow-out valve (13) is controlled in the unactuated state in a manner known per se by means of pneumatic auxiliary energy, wherein a first control line (14) acting as a supply line for auxiliary energy to the blow-out valve (13) is either connected to a pressure release point (26) in the boost pressure line (19) upstream of the throttle valve (20) or to a pressure relase point (27) in front of the compressor inlet (atmospheric pressure), in which case the control valve (24) effects closing of the blow-out valve (13) when the throttle valve (20) is unactuated.

3. Method according to claim 2, characterised in that the control valve (24) is actuated via a control device (25) by means of a pulse duty factor signal (wg), which is determined as a function of the position of the throttle valve (throttle valve angle (dkwin)) and/or of the speed (nmot) of the internal combustion engine (2) and/or the boost pressure (pist) and/or of the charging air temperature (tll).

4. Method according to one of claims 1 to 3, characterised in that the first control line (14) is opened to the surrounding air by the control valve (24) when the throttle valve (20) is unactuated.

5. Method according to at least one of the preceding claims 1 to 4, characterised in that the control valve (24) is subjected to a characteristic field control which is dependent on the operating parmeters of the internal combustion engine (2), but at least on the speed (nmot) and on the position of the throttle valve (throttle valve angle (dkwin)), and whose characteristic field is such that closure of the blow-out valve (13) is effected when the throttle valve (20) is unactuated.

6. Method of controlling a blow-out valve (51) and an emergency valve (50) of an internal combustion engine (33) controlled by means of a throttle valve (53) and provided with two exhaust gas turbo-superchargers (43, 46) each consisting of a turbine (57, 58) and a compressor (42, 45) driven thereby, wherein the compressors (42, 45) are connected to a common induction manifold (52) of the internal combustion engine (33) via separate boost pressure lines (60, 61) and the turbines (57, 58) are installed in separate exhaust gas pipes (41, 44) passing from an exhaust manifold (40) of the internal combustion engine (33), and the one exhaust gas turbo-supercharger (46) is capable of being connected to the other exhaust gas turbo-supercharger (43) during operation of the internal combustion engine (33), and wherein the controllable blow-out valve (waste gate (51)) is inserted into a bypass pipe leading from the exhaust gas collecting pipe (40) and bypassing the turbines (57, 58) of both exhaust gas turbo-superchargers (43, 46), and the controllable emergency valve (50) is inserted into the exhaust pipe of the turbine (45) of the connectable exhaust gas turbo-supercharger (46), in which case after opening of the emergency valve (50) a non-return valve (62) inserted into the charging air pipe (60) of the compressor (45) of the connectable exhaust gas turbo-supercharger (46) can open due to the increasing pressure in the charging air pipe (60), and the blow-out valve (51) and the emergency valve (50) are controllable by means of an electronic control device (56) dependent on physical parameters of the internal combustion engine (33) detected by sensors (65, 67, 68, 69), and the actuation of the blow-out valve (51) and of the emergency valve (50) is subject to a pilot control at least dependent on these physical parameters, and the charging air pipe (60, 61) is connectable via a ventilation valve (64) controllable by the controllable device to the inlet of the compressor (57, 58) of both turbo-superchargers (43, 46), characterised in that upon closure of the throttle valve (53)

the emergency valve (50) and the blow-out valve (51) are moved into the closed state, provided that in the previous operating point the blow-out valve (51) was closed and the emergency valve (50) was partly open (single-supercharger operation),

the emergency valve (50) is moved into the open position and the blow-out valve (51) into the closed position if, in the previous operating point, the emergency valve (50) was fully open and the blow-out valve (51) was at least partly open (double-supercharger operation) and the present point of operation is not yet in a region characterised for single-supercharger operation, and

the pressure impact arising in front of the throttle valve (53) is limited in strength by opening of the ventilation valve (64).

7. Method according to claim 6, characterised in that the emergency valve (50) and the blow-out valve (51) are valves opened in the unactuated position and are actuated by pneumatic auxiliary energy taken from the induction manifold (52) in front of the throttle valve (53), to which valves the auxiliary energy is supplied via control valves (stroke valves) (54, 55) operated in cycles and closed in the unactuated state, these being actuated via the control device (56) at least as a function of the position (throttle valve angle (dkwin)) of the power control element and of the speed (nmot) of the internal combustion engine (33) or additionally as a function of the boost pressure (pist) and/or of the charging air temperature (tll) by means of a pulse duty rate signal (tzv, wg).

FIG.1

FIG.2    tvh = f(nmot, dkwin)

| nmot/U/m | dkwin/(°) | | | | | |
|---|---|---|---|---|---|---|
| | 3 | 4 | 25 | 45 | 60 | 80 |
| 2000 | 100 | 0 | 30 | 40 | 50 | 55 |
| 3000 | 100 | 0 | 0 | 10 | 30 | 40 |
| 4000 | 100 | 0 | 0 | 10 | 25 | 35 |
| 5000 | 100 | 0 | 0 | 0 | 20 | 30 |
| 6000 | 100 | 0 | 0 | 0 | 0 | 0 |

FIG.3

| tvhkf | Zuschaltventil | Abblaseventil | Betriebsart |
|---|---|---|---|
| 200 | zu | zu | }  |
| 199 ⋮ 101 | getaktet mit tvh − 100 | zu | } Ein−Lader−Betrieb |
| 100 | auf | zu | } |
| 99 ⋮ 1 | auf | getaktet mit tvh | } Zwei−Lader−Betrieb |
| 0 | auf | auf | } |

FIG.4

| nmot/ (U/m) | dkwin/(°) ⟶ | | | | | |
|---|---|---|---|---|---|---|
| | 3 | 4 | 25 | 45 | 60 | 80 |
| 2 000 | 200 | 100 | 100 | 120 | 160 | 200 |
| 3 000 | 200 | 100 | 130 | 140 | 165 | 180 |
| 3 300 | 200 | 100 | 115 | 145 | 160 | 180 |
| 3 680 | 200 | 100 | 120 | 140 | 155 | 180 |
| 4 000 | 200 | 100 | 110 | 130 | 150 | 175 |
| 4 280 | 100 | 0 | 30 | 40 | 50 | 55 |
| 5 000 | 100 | 0 | 0 | 10 | 30 | 40 |
| 6 000 | 100 | 0 | 0 | 10 | 25 | 35 |
| 7 000 | 100 | 0 | 0 | 0 | 20 | 30 |
| 8 000 | 100 | 0 | 0 | 0 | 0 | 0 |

FIG.5

$tvhkf = f(nmot, dkwin)$

3